# EUROPÄISCHE PATENTANMELDUNG

(11) **EP 1 251 015 A2**
(43) Veröffentlichungstag der Anmeldung: **23.10.2002**
(21) Anmeldenummer: 02006035.6
(22) Anmeldetag: 16.03.2002
(51) Int. Cl.: B60C 27/06

(54) **Schneekette**

(30) Priorität: 17.04.2001 AT 6162001
(71) Anmelder: Kahlbacher, Anton, 3363 Amstetten-Neufurth (AT)
(72) Erfinder: Kahlbacher, Anton, 3363 Amstetten-Neufurth (AT)
(74) Vertreter: Hefel, Herbert, Dipl.-Ing.

(57) **Zusammenfassung**

Eine Schneekette für ein eine Felge und einen Reifen aufweisendes Fahrzeugrad besitzt auf der Radaußenseite liegende Arme (1, 2), die über eine Halterung mit der Felge verbindbar sind und die plattenförmige Halteteile (10) zur Halterung von umfangsgeschlossenen, endlosen Klettensträngen (16), die um die Lauffläche (12) des Reifens verlaufen, tragen. In den über der Lauffläche (12) des Reifens liegenden Abschnitten der Halteteile (10) sind auf Ihren von der Lauffläche (12) des Reifens abgewandten Seiten Vertiefungen (14) vorgesehen, in denen die umfangsgeschlossenen, endlosen Kettenstränge (16) ein jeweiliges plattenförmiges Halteteil (10) überqueren und in denen die Kettenstränge (16) am jeweiligen Halteteil (10) befestigt sind.

## Beschreibung

Die Erfindung betrifft eine Schneekette für ein eine Felge und einen Reifen aufweisendes Fahrzeugrad mit auf der Radaußenseite liegenden Armen, die über eine Halterung mit der Felge verbindbar sind und die plattenförmige Halteteile zur Halterung von umfangsgeschlossenen, endlosen Klettensträngen, die um die Lauffläche des Reifens verlaufen, tragen

Eine Schneekette mit auf der Radaußenseite liegenden Armen, die über eine Halterung mit der Felge verbindbar sind, ist beispielsweise aus der AT-PS 385 243 bekannt. Bei dieser sind als Halteteile für die Schneekette Metallbügel vorgesehen, die in Ösen an den freien Enden der Arme gelagert sind. Nachteilig ist hierbei die relativ aufwendige Herstellung der Schneekette. Auch ist die Führung der Kettenstränge auf der Lauffläche des Reifens durch diese bügelförmigen Halteteile nicht optimal. Die Halterung zur Befestigung der Schneekette an der Felge umfaßt im Bereich der sich kreuzenden Arme angeordnete Kupplungsbügel, deren freie Enden L-förmig abgekantet sind und die in Gummiriemen einhängbar sind, welche in die Felge des Rades eingehakt werden.

Eine weitere durch öffentliche Vorbenutzung bekannte Schneekette, die u.a. auch in der Montageanleitung TRAK-Schneekette der Firma Autotyp SA, Case postale 53, CH-1037 Etagnieres/Lausanne beschrieben ist, weist als Halteteile plattenförmige Teile auf, die verschwenkbar an den freien Enden der Arme gelagert sind und einen ersten, an der Radaußenseite liegenden Abschnitt sowie einen an der Lauffläche des Reifens anliegenden Abschnitt umfassen. Zwischen diesen Halteteilen verlaufen Kettenstränge, die jeweils bei den beiden Halteteilen, zwischen denen sie verlaufen, enden und deren Enden an den Halteteilen festgelegt sind. Es wird dadurch zwar eine gute Halterung der Kette auf der Lauffläche erzielt, die Herstellung der Kette ist aufgrund der relativ vielen Einzelteile und insbesondere des damit verbundenen Montageaufwandes relativ kostenintensiv. Die Halterung der Arme der Schneekette an der Felge erfolgt mittels eines an einer Felgenmutter bzw. Felgenschraube festgeklemmten Klemmkopfes und die Arme mit den den Klemmkopf verbindenden Verbindungsteilen.

Einen ähnlichen Aufbau der Halteteile und der Kettenstränge weist auch die in der DE 3844 494 A1 gezeigte Schneekette auf.

Eine mittels Klemmköpfen an Radmuttern bzw. Radschrauben befestigbare Gleitschutzvorrichtung ist auch aus der EP 0 285 903 A1 bekannt. Einen Klemmkopf zum Befestigen einer an der Radaußenseite angeordneten Gleitschutz-Halteeinrichtung wird weiters in der DE 3910 669 A1 beschrieben.

Eine Schneekette der eingangs genannten Art ist aus der EP 911 193 A2 bekannt. Bei der in dieser Schrift gezeigten Schneekette sind ebenfalls umfangsgeschlossene, um die Lauffläche des Reifens verlaufende Kettenstränge vorgesehen. Von diesen ist der der Außenseite des Fahrzeugrades zugewandte Kettenstrang mit einem jeweiligen Haltebügel verbunden, der von einem Arm getragen wird, wobei die Arme über eine Halterung mit der Felge verbindbar sind. Der der Radinnenseite zugewandte Kettenstrang ist lose über die Distanzstücke mit dem am Haltebügel befestigten Kettenstrang verbunden. Nachteilig bei dieser vorbekannten Schneekette ist es, daß eine nur ungenügende Führung insbesondere des der Innenseite des Fahrzeugrades zugewandten Kettenstrangs erreicht wird, so daß es zu einer Verwindung dieses Kettenstranges und der Distanzstücke gegenüber dem anderen Kettenstrang kommen kann, wodurch es neben einer Verschlechterung der Fahreigenschaften auch zu einem erhöhten Verschleiß der Schneekette kommen kann. Weiters werden auf die Befestigung des der Außenseite des Fahrzeugrades zugewandten Kettenstranges am Haltebügel relativ große vom anderen Kettenstrang herrührende Hebelkräfte ausgeübt, was wiederum zu einem erhöhten Verschleiß der Teile oder zu einer Beschädigung dieser Befestigung führen kann.

Bei anderen herkömmlichen Schneeketten, wie sie beispielsweise aus der DE 38 13 661 A1 oder der bereits genannten DE 38 844 494 A1 bekannt sind, bestehen daher die Kettenstränge aus einzelnen Teilsträngen, deren beiden Enden jeweils mit einem über der Lauffläche des Reifens liegenden Abschnitt eines Halteteils verbunden sind. Das Halteteil dient jeweils als Verbindung zwischen den vier Teilsträngen eines Kettenstrangs, wobei die gesamte auf einen Kettenstrang ausgeübte Belastung über die Halteteile geführt wird, wodurch es sehr rasch zu Verschleißerscheinungen kommt und auch die fahrtechnischen Eigenschaften dieser Ketten sind wenig zufriedenstellend. Weiters ist der Herstellungsaufwand bei diesen herkömmlichen Schneeketten relativ groß. Die Schneeketten bestehen aus einer relativ großen Zahl von Einzelteilen, die aneinander montiert werden müssen.

Aufgabe der Erfindung ist es, eine Schneekette der eingangs genannten Art bereitzustellen, deren Halteteile gegen Verschleiß geschützt sind und die bei einer ausgezeichneten Halterung der Kettenstränge auf der Reifenoberfläche einen relativ einfachen Aufbau aufweist und kostengünstig herstellbar ist. Erfindungsgemäß gelingt dies bei einer Schneekette der eingangs genannten Art dadurch, daß in den über der Lauffläche des Reifens liegenden Abschnitten der Halteteile auf Ihren von der Lauffläche des Reifens abgewandten Seiten Vertiefungen vorgesehen sind, in denen die umfangsgeschlossenen, endlosen Kettenstränge ein jeweiliges plattenförmiges Halteteil überqueren und in denen die Kettenstränge am jeweiligen Halteteil befestigt sind.

Eine erfindungsgemäße Schneekette besitzt gegenüber vorbekannten Schneeketten vergleichsweise wenige unterschiedliche Einzelteile und kann mit einem verringerten Zeitaufwand montiert werden. Auftretende Belastungen und Zugkräfte werden vom Kettenstrang aufgenommen und müssen nicht auf die Halteteile übertragen werden.

Zur Befestigung der Kettenstränge an den Halteteilen sind günstigerweise Schrauben oder Nieten vorgesehen, die ein Kettenglied und eine Bohrung im Halteteil durchsetzen. Vorteilhafterweise ist im Boden der Vertiefung des Halteteils eine in Längsrichtung der Vertiefung verlaufende Nut zur Aufnahme von senkrecht zur Lauffläche ausgerichteten Kettengliedern vorgesehen. In einer anderen bevorzugten Ausführungsform ist keine durchgehende Nut im Boden der Vertiefung vorgesehen, sondern es sind zumindest zwei in Längsrichtung der Vertiefung voneinander beabstandete Ausnehmungen zur Aufnahme von jeweils einem senkrecht zur Lauffläche stehenden Kettenglied vorgesehen. Durch diese Ausbildungen der Halteteile wird eine schonende und sichere Lagerung der Kettenglieder in den Halteteilen erreicht.

Weitere Vorteile und Einzelheiten der Erfindung werden im folgenden anhand der in der beiliegenden Zeichnung gezeigten Ausführungsbeispiele der Erfindung erläutert. In der Zeichnung zeigen:
- Fig. 1: eine Ansicht der Radaußenseite mit einer angelegten erfindungsgemäßen Schneekette;
Fig. 2 einen Querschnitt entlang der Linie A-A von Fig. 1;
Fig. 3 eine vergrößerte Darstellung eines Halteteils in Seitenansicht mit in die Vertiefungen eingelegten Kettensträngen;
Fig. 4 eine Draufsicht auf das Halteteil mit den eingelegten Kettensträngen;
Fig. 5 eine Ansicht des Halteteils - in Richtung des Pfeils in Fig. 3;
Fig. 6 eine vergrößerte Darstellung des Querschnitts der Vertiefung des Halteteils (Detail B in Fig. 3);
Fig. 7 eine vergrößerte Darstellung des Querschnitts der auf der der Lauffläche zugewandten Seite des Halteteils verlaufenden Erhebung (Detail C von Fig. 3);
Fig. 8 einen Teil der voneinander beabstandeten und mittels eines Gummifederelements zusammengezogenen Kettenstränge und
Fig. 9 einen Schnitt entlang der Linie D-D von Fig. 3 eines etwas modifizierten Ausführungsbeispiels der Erfindung.

Eine in den Figuren dargestellte Schneekette umfaßt im Bereich des Felgenmittelpunkts sich kreuzende Arme 1, 2, die bei montierter Schneekette neben der Radaußenseite liegen und zur Ermöglichung einer platzsparenden Lagerung um eine zentrale Achse gegeneinander verschwenkbar gelagert sind.

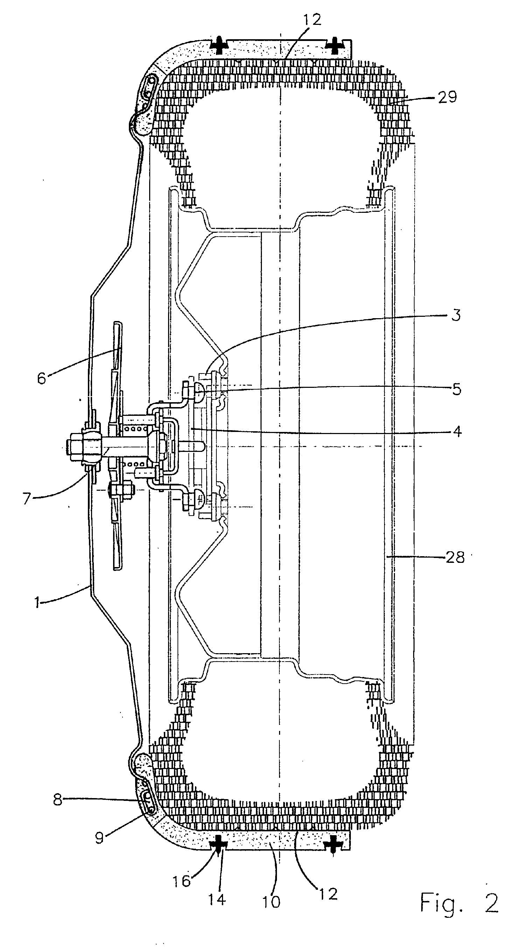

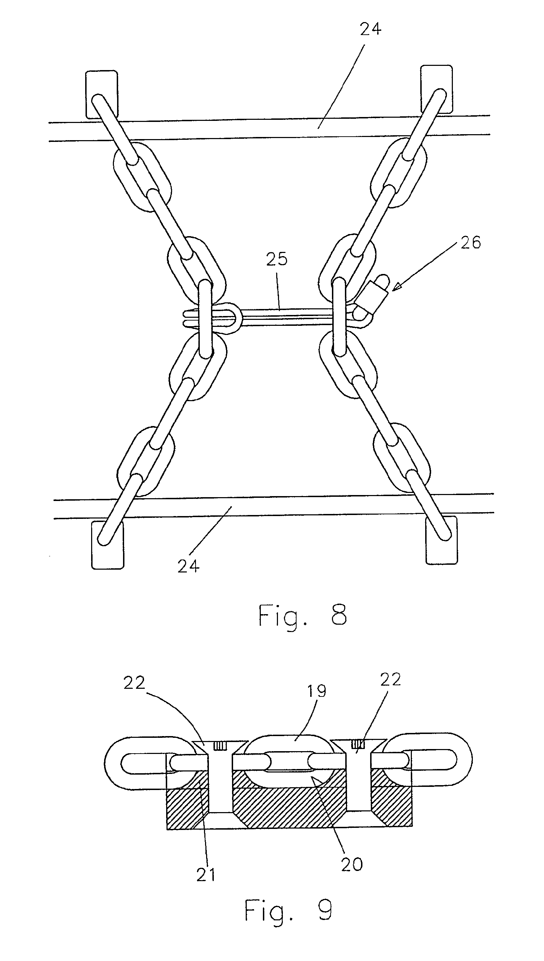

Die Befestigung dieser Arme 1, 2 an der Felge 28 ist nicht Gegenstand der vorliegenden Erfindung und kann beispielsweise in einer beliebigen herkömmlichen Art erfolgen, wie dies beispielsweise in der Beschreibungseinleitung ausgeführt ist und wie dies bei dem in der Beschreibungseinleitung genannten Stand der Technik gezeigt ist. Nur als Beispiel einer möglichen Befestigung ist die in Fig. 2 eingezeichnete Halterung zu verstehen. Es ist hier ein Adapterteil vorgesehen, der über Klemmköpfe 3 an den Radmuttern befestigbar ist. Der Adapter umfaßt eine Platte 4, in der schlüssellochförmige Öffnungen vorgesehen sind, wobei pilzförmige Befestigungsteile 5 in den erweiterten Teil der schlüssellochförmigen Öffnungen einführbar sind und zur Befestigung der Arme 1, 2 in den schmaleren Teil dieser schlüssellochförmigen Öffnungen verschoben werden. Zur Verschiebung der Befestigungsteile 5 ist eine Betätigungsscheibe 6 vorgesehen. Die Arme 1, 2 sind gelenkig nach Art eines Kugelgelenks auf einem Zentralbolzen 7 der Halterung gelagert.

An den freien Enden der Arme 1, 2 sind diese Arme umgebogen und bilden Ösen 8. Die Ösen 8 umschließen einen Bolzen 9, der mit Spiel (in achsialer Richtung der Arme 1,2) in der Öse 8 gelagert ist. Der Bolzen 9 ist in einem Halteteil 10 festgelegt und überbrückt eine Durchtrittsöffnung 11 in diesem Halteteil.

Die Halteteile 10 sind jeweils plattenförmig ausgebildet und besitzen einen gebogenen Verlauf mit einem an der Radaußenseite liegenden Abschnitt sowie einem an der Lauffläche 12 des Reifens 29 anliegenden Abschnitt. Die Durchtrittsöffnung 11 ist in dem an der Radaußenseite liegenden Abschnitt vorgesehen, und es sind beidseitig jeweils drei miteinander fluchtende Bohrungen 13 in den verbleibenden zeitlichen Stegen des Halteteils 10 eingebracht. Je nach Größe des Rades kann der Bolzen 9 in einer dieser drei Bohrungen 13 angeordnet werden. Durch das Spiel zwischen dem Bolzen 9 und der Öse 8 können Walkbewegungen des Reifens beim Abrollen zu einem geringen Teil aufgenommen werden (zu einem Hauptteil werden diese von dem gelenkig gelagerten zentralen Bolzen sowie über die Arme 1, 2 aufgefangen).

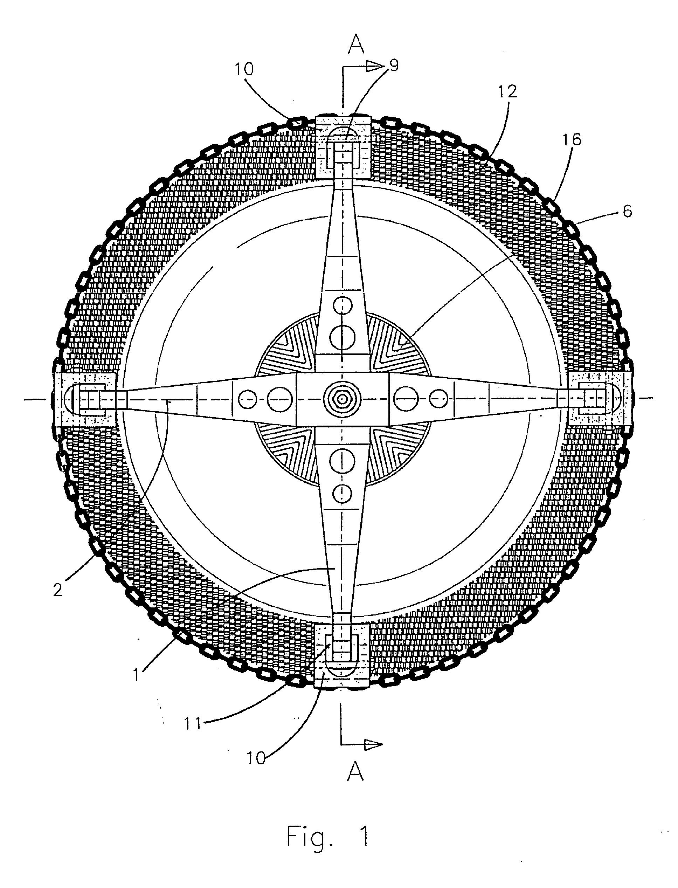

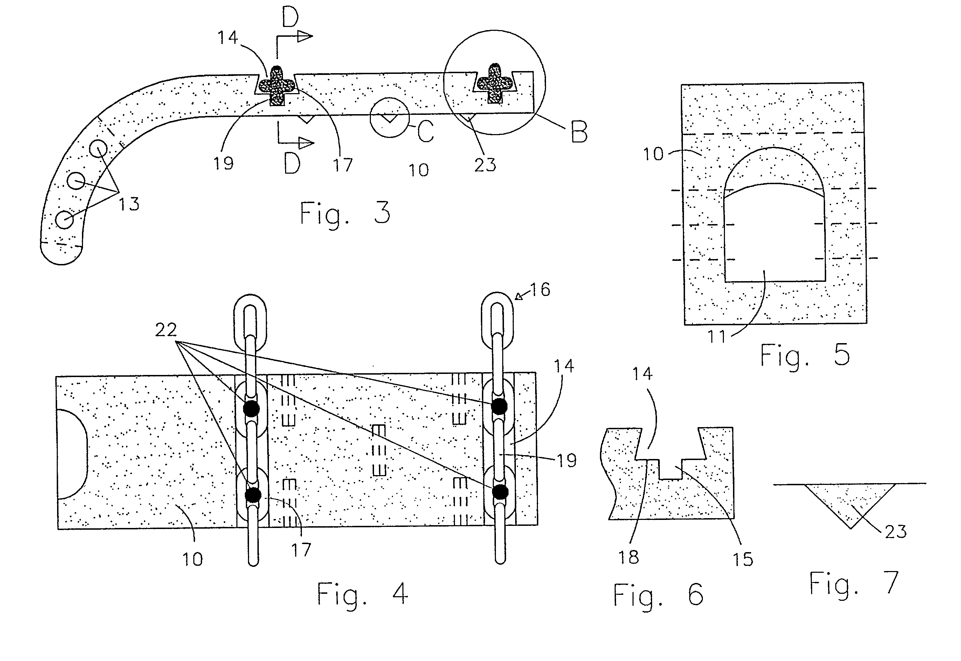

In dem an der Lauffläche anliegenden Abschnitt des jeweiligen Halteteils 10 sind an der vom Reifen abgewandten Außenseite des Halteteils in Längsrichtung der Lauffläche verlaufende Vertiefungen 14 eingebracht. Diese erstrecken sich durchgehend über die Breite des Halteteils und weisen in dem in den Figuren dargestellten Ausführungsbeispiel einen trapezförmigen Querschnitt auf. Am Boden dieser Vertiefungen 14 ist beim Ausführungsbeispiel nach den Fig. 1 bis 7 eine durchgehende Nut 15 vorgesehen, die in Längsrichtung der Vertiefung 14 verläuft, zwecks Aufnahme der endlosen Kettenstränge, wie im folgenden noch genauer erläutert wird.

Die Kette weist zwei umfangsgeschlossene Kettenstränge 16 (d.h. Endlosketten) auf, die um die Lauffläche des Reifens verlaufen und in den Vertiefungen 14 über die plattenförmigen Halteteile 10 geführt sind. Die parallel zur Lauffläche liegenden Kettenglieder liegen dabei auf dem Boden 18 der Vertiefung 14 auf. Die senkrecht zur Lauffläche stehenden Kettenglieder 19 ragen in die Nut 15. Beim Ausführungsbeispiel gemäß Fig. 9 sind anstelle einer durchgehenden Nut 15 im Boden 18 der Vertiefung drei in Längsrichtung der Vertiefung voneinander beabstandete Ausnehmungen 20 zur Aufnahme der senkrecht zur Lauffläche stehenden Kettenglieder 19 vorgesehen. Durch die zwischen den Ausnehmungen 20 verbleibenden Stege 21 wird einem Verrutschen der Kette gegenüber den Halteteilen 10 entgegengewirkt. Die senkrecht zur Lauffläche stehenden Kettenglieder stehen in Seitenansicht gesehen über die Oberfläche der Halteteile vor.

Zur Befestigung der Kettenstränge 16 an den Halteteilen 10 sind Schrauben 22, beispielsweise in der Form von Imbusschrauben, vorgesehen, die Kettenglieder 17 sowie Bohrungen in den Halteteilen 10 durchsetzen. Jeder Kettenstrang ist an einem jeweiligen Halteteil 10 mittels zweier Schrauben 22 durch zwei von einem Kettenglied 19 beabstandete Kettenglieder 17 befestigt. Statt Schrauben könnten auch Befestigungsnieten vorgesehen sein.

Auf der der Lauffläche 12 zugewandten Seite der Halteteile 10 sind in Längsrichtung der Lauffläche verlaufende Erhebungen 23 angeordnet, im gezeigten Ausführungsbeispiel links und rechts jeweils zwei voneinander beabstandete Erhebungen und in der Mitte eine einzelne Erhebung. Es wird dadurch einem seitlichen Verrutschen auf dem Reifen entgegengewirkt.

Bevorzugterweise bestehen die Halteteile 10 aus einem gummielastischen Material in Form eines Kunststoffs.

Eine erfindungsgemäße Schneekette zeichnet sich durch eine besonders gute Laufruhe aus.

Zur Beabstandung der beiden Kettenstränge 16 sind in Querrichtung der Lauffläche verlaufende Querstege 24 vorgesehen (vgl. Fig. 8; der Übersichtlichkeit halber sind diese Querstege in Fig. 1 nicht eingezeichnet). Die Querstege können beispielsweise als senkrecht zur Lauffläche liegende Distanzstrebe ausgebildet sein, wobei die endlosen Kettenstränge durch Öffnungen in diese Distanzstrebe geführt sind. Zur Anpassung an unterschiedliche Radgrößen sind die endlosen Kettenstränge 16 im Bereich zwischen den Querstegen 24 durch Gummifederzugelemente 25 zusammengezogen. Diese können bevorzugterweise als O-Ringe ausgebildet sein. Auf einer Seite kann der O-Ring in das Kettenglied herumgeführt und durch die vom Ende des O-Rings gebildete Schlaufe durchgeführt sein. Auf der anderen Seite ist ein Verschlußteil 26 vorgesehen. Hierfür kann beispielsweise ein Kabelbinder verwendet werden, der nur das durch ein Kettenglied durchgesteckte und eine Schlaufe bildende Ende des O-Rings gelegt und verschlossen ist. Bei der Auslieferung der Kette können eine Mehrzahl solcher Gummifederzugelemente bereits vormontiert sein. Um die Kette an einen größeren Raddurchmesser anzupassen, können dann in einfacher Weise einige dieser Federzugelemente durch Durchschneiden und Abziehen von den Endlos-Kettensträngen entfernt werden.

### Legende zu den Hinweisziffern:

- 1: Arm
- 2: Arm
- 3: Klemmkopf
- 4: Platte
- 5: Befestigungsteil
- 6: Betätigungsscheibe
- 7: Zentralbolzen
- 8: Ösen
- 9: Bolzen
- 10: Halteteil
- 11: Durchtrittsöffnung
- 12: Lauffläche
- 13: Bohrung
- 14: Vertiefung
- 15: Nut
- 16: endloser Kettenstrang
- 17: Kettenglied
- 18: Boden
- 19: Kettenglied
- 20: Ausnehmung
- 21: Steg
- 22: Schraube
- 23: Erhebung
- 24: Quersteg
- 25: Gummifederzugelement
- 26: Verschlußteil
- 27: Felge
- 28: Reifen

## Patentansprüche

1. Schneekette für ein eine Felge und einen Reifen aufweisendes Fahrzeugrad mit auf der Radaußenseite liegenden Armen (1, 2), die über eine Halterung mit der Felge verbindbar sind und die plattenförmige Halteteile (10) zur Halterung von umfangsgeschlossenen, endlosen Klettensträngen (16), die um die Lauffläche (12) des Reifens verlaufen, tragen, **dadurch gekennzeichnet, daß** in den über der Lauffläche (12) des Reifens liegenden Abschnitten der Halteteile (10) auf Ihren von der Lauffläche (12) des Reifens abgewandten Seiten Vertiefungen (14) vorgesehen sind, in denen die umfangsgeschlossenen, endlosen Kettenstränge (16) ein jeweiliges plattenförmiges Halteteil (10) überqueren und in denen die Kettenstränge (16) am jeweiligen Halteteil (10) befestigt sind.

2. Schneekette nach Anspruch 1, **dadurch gekennzeichnet, daß** zur Befestigung des jeweiligen endlosen Kettenstrangs (16) am Halteteil (10) wie ansich bekannt mindestens eine ein Kettenglied (17) und eine Bohrung im Halteteil (10) durchsetzende Schraube (22) oder Niete vorgesehen ist.

3. Schneekette nach Anspruch 2, **dadurch gekennzeichnet, daß** wie ansich bekannt zwei derartige Schrauben oder Nieten vorgesehen sind, die zwei in Richtung des endlosen Kettenstrangs (16) voneinander beabstandete Kettenglieder (17) durchsetzen.

4. Schneekette nach einem der Ansprüche 1 bis 3, **dadurch gekennzeichnet, daß** das Halteteil (10) wie ansich bekannt einen gebogenen Verlauf besitzt und einen an der Radaußenseite liegenden Abschnitt sowie einen sich über den Großteil der Breite der Lauffläche (12) des Reifens sich erstreckenden und an der Lauffläche (12) des Reifens anliegenden Abschnitt aufweist.

5. Schneekette nach einem der Ansprüche 1 bis 4, **dadurch gekennzeichnet, daß** die Vertiefung im Querschnitt trapezförmig ausgebildet ist.

6. Schneekette nach einem der Ansprüche 1 bis 5, **dadurch gekennzeichnet, daß** die Vertiefung (14) in Längsrichtung der Lauffläche (12) verläuft.

7. Schneekette nach einem der Ansprüche 1 bis 6, **dadurch gekennzeichnet, daß** am Boden der Vertiefung (14) eine in Längsrichtung der Vertiefung (14) verlaufende durchgehende Nut (15) zur Aufnahme von senkrecht zur Lauffläche (12) ausgerichteten Kettengliedern (19) vorgesehen ist.

8. Schneekette nach einem der Ansprüche 1 bis 7, **dadurch gekennzeichnet, daß** am Boden der Vertiefung (14) zumindest zwei in Längsrichtung der Vertiefung (14) voneinander beabstandete Ausnehmungen (20) zur Aufnahme von jeweils einem senkrecht zur Lauffläche (12) ausgerichteten Kettenglied (19) vorgesehen sind.

9. Schneekette nach einem der Ansprüche 1 bis 8, **dadurch gekennzeichnet, daß** das Halteteil (10) wie ansich bekannt verschwenkbar mit dem Arm (1, 2) verbunden ist.

10. Schneekette nach einem der Ansprüche 1 bis 9, **dadurch gekennzeichnet, daß** in ansich bekannter Weise zwei in Querrichtung der Lauffläche voneinander beabstandete umfangsgeschlossene Kettenstränge (16) vorgesehen sind, wobei zur Beabstandung der Kettenstränge (16) zwischen den Kettensträngen (16) verlaufende Querstege (24) vorgesehen sind.

11. Schneekette nach Anspruch 10, **dadurch gekennzeichnet, daß** die Kettenstränge (16) in Bereichen zwischen den Querstegen (24) durch Gummifederzugelemente (25) zusammengezogen sind.

12. Schneekette nach Anspruch 11, **dadurch gekennzeichnet, daß** die Gummifederzugelemente (25) von O-Ringen gebildet werden.

13. Schneekette nach einem der Ansprüche 1 bis 12, **dadurch gekennzeichnet, daß** wie ansich bekannt zwei im Bereich des Felgenmittelpunkts sich kreuzende Arme (1, 2) vorgesehen sind, an deren vier freien Enden jeweils ein Halteteil (10) angeordnet ist.
